# EUROPÄISCHE PATENTSCHRIFT

(11) **EP 1 148 297 B1**
(45) Veröffentlichungstag und Bekanntmachung des Hinweises auf die Patenterteilung: **16.07.2003**
(21) Anmeldenummer: 01108537.0
(22) Anmeldetag: 05.04.2001
(51) Int. Cl.: F23L 11/00, F16K 11/052

(54) **Klappe, insbesondere Umschaltklappe für grosse Kanalquerschnitte**
Valve, in particular change-over valve for large cross section pipes
Clapet, en particulier clapet d'inversion pour conduites à grande section transversale

(30) Priorität: 20.04.2000 DE 10019686
(43) Veröffentlichungstag der Anmeldung: 24.10.2001
(73) Patentinhaber: NEM Power-Systems, Niederlassung Deutschland der NEM B.V. Niederlande, 45665 Recklinghausen (DE)
(72) Erfinder: Erichsen, Volker von, 45659 Recklinghausen (DE)
(74) Vertreter: Radünz, Ingo, Dipl.-Ing.

(56) Entgegenhaltungen:
- EP-A- 0 707 176
- DE-A- 3 203 711

## Beschreibung

Die Erfindung betrifft eine Klappe, insbesondere Umschaltklappe für große Kanalquerschnitte, mit einem mit Kanalanschlüssen versehenen Gehäuse und einem im Gehäuse mittels eines Scharniers schwenkbar gelagerten Flügels, der über mindestens eine Antriebswelle und einer eine Spannhebelbaugruppe bestehend aus einem an der Antriebswelle befestigten Spannhebel und mindestens einer einerseits mit dem Spannhebel und andererseits mit dem Flügel gelenkig verbundenen Gelenkstange antreibbar ist.

Großflügel-Umschaltklappen werden zum Absperren von Kanälen in Anlagenbauteilen, wie Entschwefelungs- und Entstickungsanlagen eingesetzt und ermöglichen einen durchgehenden Betrieb des Kessels über einen Bypasskanal, selbst wenn die Entschwefelungs- und/oder Entstickungsanlagen betriebsbedingt abgeschaltet werden müssen.

Großflügel-Umschaltklappen werden auch in Gasturbinenanlagen zwischen Gasturbine und Abhitzekessel eingesetzt.

Aus der EP 0 707 176 B1 ist eine Spannhebelumschaltklappe für große Leistungsquerschnitte bekannt, bei der im Bereich des Kanalanschlusses für einen Bypasskanal eine sich quer durch den Kanal erstreckende Antriebswelle vorgesehen ist. Mit der Welle ist eine Spannhebelbaugruppe verbunden, um den Flügel zu verschwenken. Die durchgehende Spannhebelwelle ist an der Scharnierwelle um etwa 1/6 der lichten Nennweite des Bypasskanals in den Leitungsquerschnitt des Bypasskanals hinein versetzt angeordnet. Damit erzeugt die Spannhebelwelle einen zusätzlichen Druckverlust. Wird ein Kraftwerk fast ausschließlich über die Entschwefelungs- und/oder Entstickungsanlage gefahren, wie dies in Europa ist, ist der Bypasskanal meistens geschlossen und die im Bypasskanal liegende Spannhebelwelle führt bei Normalbetrieb nicht zu einem zusätzlich erzeugten Druckverlust. Für die kurze Zeit des Bypassbetriebes kann dieser vernachlässigt werden.

Die Bewertung ändert sich jedoch, wenn die Kraftwerke z. B. wie in den USA ein halbes Jahr lang über die Rauchgasbehandlungsanlage und im zweiten Halbjahr über den Bypass gefahren werden. Bei dieser Anlage erzeugt die im freien Kanalquerschnitt liegende Spannhebelwelle einen ständig zu überwindenden Druckverlust, der ökonomisch nicht mehr vernachlässigt werden kann, da insbesondere bei Kanälen großen Querschnitts durch die Antriebswelle ein Querschnittsverlust von bis zu 15 bis 20 % auftreten kann.

Es ist daher die Aufgabe der vorliegenden Erfindung, eine gattungsgemäße Klappe zu schaffen, bei der der Querschnittsverlust durch den Klappenantrieb verringert wird.

Diese Aufgabe wird dadurch gelöst, dass in den Seitenwänden des Gehäuses jeweils ein die Seitenwand durchsetzender Antriebswellenzapfen gelagert ist und dass an dem innenliegenden Ende eines jedes Zapfens der Spannhebel einer Spannhebelbaugruppe befestigt ist und dass an dem außenliegenden Ende des Antriebszapfens ein Drehantrieb angreift.

Bei der erfindungsgemäßen Klappe wird der Querschnittsverlust erheblich verringert, weil keine durchgehende Antriebswelle den Kanalquerschnitt durchsetzt, sei es im Bereich des Betriebskanals oder des Bypasskanals.

Da bei der erfindungsgemäß ausgebildeten Klappe die Spannhebelgruppen ganz außen in der Nähe der Seitenwände liegen, muss der Flügel steifer ausgebildet werden, um die gleiche Druchbiegungswerte zu erhalten, die einen wesentlichen Einfluss auf die Dichtigkeit der Klappe in Schließstellung haben.

Während sich bei einer Umschaltklappe der Flügel in der einen Schließstellung in eine sich im Kanalanschluss ausgebildete Tasche legen kann, ist es bei Ausbildung der Klappe als einfache Absperrklappe erforderlich, dass der anschließende Kanal einseitig erweitert wird, um in Offenstellung der Klappe eine Tasche für den Flügel bereit zu stellen.

Die Unteransprüche 2-4 betreffen vorteilhafte Ausgestaltungen der Klappe.

Eine Ausführungsform der erfindungsgemäßen Klappe in Form einer Umschaltklappe soll nun anhand der beigefügten Figuren näher erläutert werden. Es zeigt:
- Fig. 1: einen Schnitt durch das Klappengehäuse quer zur Strömungsrichtung, wobei sich der Flügel in der Stellung befindet, in der der Bypasskanal geschlossen ist,
- Fig. 2: einen Längsschnitt durch das Gehäuse, wobei sich der Flügel in der Stellung befindet, in der der Betriebskanal geschlossen und der Bypasskanal geöffnet ist,
- Fig. 3a und 3b: eine Kolben-Zylinderantriebsanordnung für die beiden Spannhebelbaugruppen und
- Fig. 4: eine elektromechanische Antriebsanordnung für die beiden Spannhebelbaugruppen.

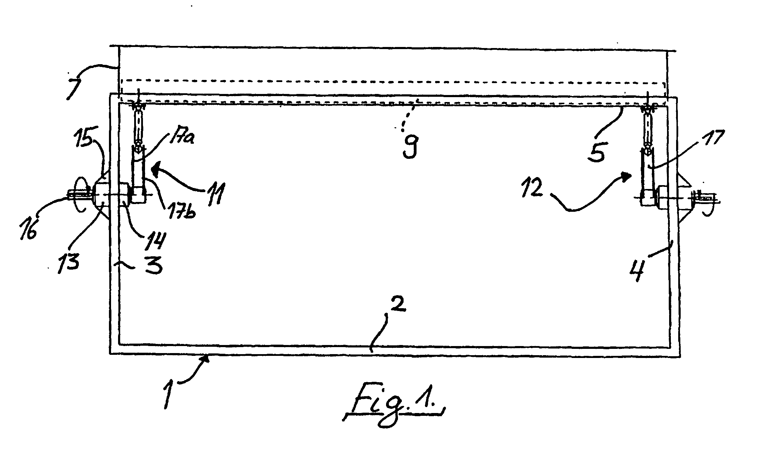

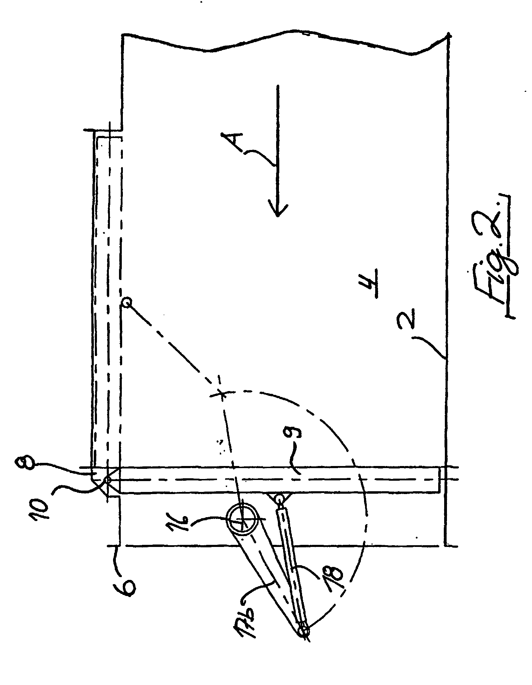

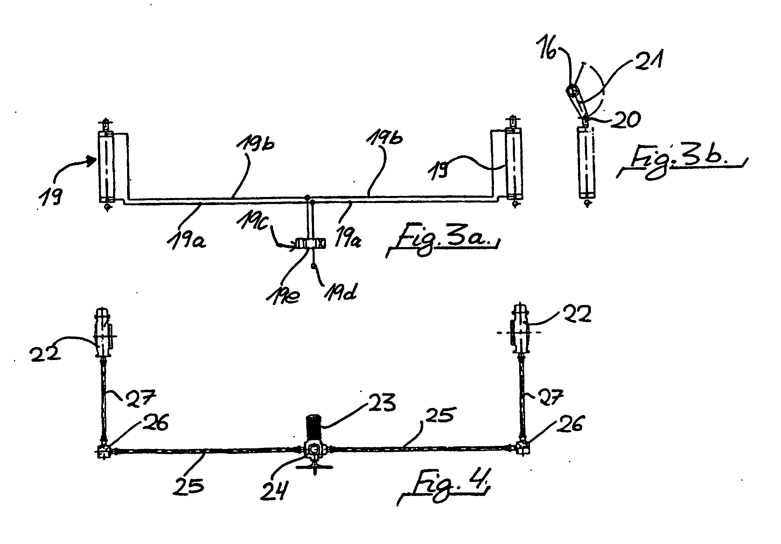

Das Gehäuse 1 der Klappe weist einen Boden 2, zwei einander gegenüber stehende Seitenwände 3 und 4 sowie eine Deckplatte 5 auf. Wie aus den Fig. 1 und 2 ersichtlich ist, ist stromab der eintretenden Gasströmung A am Gehäuse 1 ein Kanalanschluss 6 für einen Betriebskanal und auf der Oberseite ein Kanalanschluss 7 für einen Bypasskanal vorgesehen.

In einer am Bypasskanal vorgesehenen Tasche 8 ist ein Flügel 9 um eine horizontale Scharnierachse 10 derart schwenkbar gelagert, dass der Flügel zwischen der in der Fig. 2 gezeigten Schließstellung für das Schließen des Betriebskanals und der in der Fig. 1 gezeigten Stellung für das Schließen des Bypasskanals verschwenkbar ist, d. h. um ca. 90°. Strömungsbegünstigende und Druckverlust senkende Schrägstellungen des Flügels z. B. um 30° sind ebenfalls möglich.

Für das Verschwenken des Flügels 9 um die Scharnierachse 10 sind zwei Spannhebelbaugruppen 11 und 12 an den beiden gegenüberliegenden Seitenwänden 3 und 4 im Inneren des Gehäuses vorgesehen. Mit der Wand sind jeweils ein Außenlager 13 und ein Innenlager 14 verschweißt, wobei das Außenlager 13 noch mittels Stützblechen 15 zusätzlich an der Wand abgestützt ist. Die beiden Lager 13 und 14 und die Wand wird von einem Antriebszapfen 16 durchsetzt. Am innenliegenden Ende ist ein Spannhebel 17 mit zwei Hebelarmen 17a und 17b befestigt. Zwischen den freien Enden der beiden Helebarme 17a und 17b ist eine Spann- bzw. Gelenkstange 18 angelenkt, deren anderes Ende an dem Flügel 9 angelenkt ist.

Der Antriebszypfen 16 soll in Richtung des in der Fig. 1 dargestellten Drehpfeiles verschwenkbar sein.

Hierzu eignet sich die in den Fig. 3a und 3b gezeigte Anordnung. An der Wand oder einer sonstigen Stützkonstruktion sind auf der Außenseite der beiden Seitenwände hydraulisch oder pneumatisch beaufschlagbare Kolbenzylinderantriebe 19 angelenkt. Auf dem freien Ende des Antriebszapfens 16 ist ein Hebelarm 21 befestigt, dessen freies Ende gelenkig mit der Kolbenstange 20 verbunden ist. Diese Anordnung kann zu einem Verschwenken des Antriebs um z. B. 135° dienen.

Die Kolbenzylinderantriebe 19 sind über Leitungen 19a und 19b und ein Steuerventil 19c mit einer Druckquelle 19d und einer Ableitung 19e verbunden.

Bei der Anordnung nach Fig. 4 sind auf die außenliegenden Enden der Zapfen 16 Schneckengetriebe 22 aufgesetzt, die von einem Elektromotor 23 her über ein Verzweigungsgetriebe 24, Kardanwellen 25, Winkelgetriebe 26 und Kardanwellen 27 antreibbar (Drehmomentverzweigung) sind.

## Patentansprüche

1. Klappe, insbesondere Umschaltklappe für große Kanalquerschnitte, mit einem mit Kanalanschlüssen versehenen Gehäuse und einem im Gehäuse (1) mittels eines Scharnier (10) schwenkbar gelagerten Flügels (9), der über zwei Antriebswellen (16) und zwei Spannhebelbaugruppen (11, 12) bestehend aus jeweils einem an der Antriebswelle befestigten Spannhebel (17) und einer einerseits mit dem Spannhebel (17) und andererseits mit dem Flügel (9) gelenkig verbundenen Gelenkstange (18) antriebbar ist,
wobei in den Seitenwänden (3, 4) des Gehäuses (1) jeweils ein die Seitenwand (3;4) durchsetzender Antriebswellenzapfen (16) gelagert ist, wobei an dem innenliegenden Ende eines jeden Zapfens der Spannhebel (17) der Spannhebelbaugruppe (11; 12) befestigt ist und wobei an dem außenliegenden Ende des Antriebszapfens ein Drehantrieb (19, 21; 22) angreift.

2. Klappe nach Anspruch 1,
**dadurch gekennzeichnet, dass** die Drehantriebe jeweils aus einem Kolbenzylinderantrieb (19) und einem mit einem Ende am Antriebszapfen (16) befestigten und mit dem anderen Ende am freien Ende der Kolbenstange (20) des Kolbenzylinderantriebs (19) angelenkten Stange (21) bestehen.

3. Klappe nach Anspruch 2, **dadurch gekennzeichnet, dass** die Kolbenzylinderantriebe (19) über ein gemeinsames Steuerventil (19c) ansteuerbar sind.

4. Anordnung nach Anspruch 1,
**dadurch gekennzeichnet, dass** die Drehantriebe auf die Außenenden der Antriebszapfen (16) befestigte Getriebeeinheiten (22) aufweisen, die über eine mechanische Drehmomentverzweigung (24, 25, 26, 27) von einem Elektroantrieb (23) antreibbar sind.

## Claims

1. Flap, particularly a switch-over flap for large channel cross-sections, with a housing, which is provided with channel connections, and a vane (9) which is pivotably mounted in the housing (1) by means of a hinge (10) and which is drivable by way of two drive shafts (16) and two clamping lever subassemblies (11, 12) each consisting of a respective clamping lever (17), which is fastened to the drive shaft, and a linkage (18) pivotably connected on the one hand with the clamping lever (17) and on the other hand with the vane (9), wherein a respective drive shaft pin (16) is mounted in each of the side walls (3, 4) and extends through the side wall (3; 4), wherein the clamping lever (17) of the clamping lever subassembly (11; 12) is fastened to the inwardly disposed end of each pin and wherein a rotary drive (19, 21; 22) engages at the outwardly disposed end of the drive pin.

2. Flap according to claim 1, **characterised in that** the rotary drives each consist of a piston-cylinder drive (19) and a rod (21) fastened by one end to the drive pin (16) and articulated by the other end to the free end of the piston rod (20) of the piston-cylinder drive (19).

3. Flap according to claim 2, **characterised in that** the piston-cylinder drives (19) are controllable in drive by way of a common control valve (19c).

4. Arrangement according to claim 1, **characterised in that** the rotary drives have transmission units (22) which are fastened to the outer ends of the drive pins (16) and which are drivable by an electric drive (23) by way of mechanical torque splitting means (24, 25, 26, 27).

## Revendications

1. Robinet, en particulier robinet inverseur pour grosses sections transversales de conduits, comprenant un corps muni de raccordements de conduits et un papillon (9), logé de façon pivotante dans le corps (1) au moyen d'une charnière (10) et pouvant être entraîné par l'intermédiaire de deux arbres moteurs (16) et de deux sous-groupes de leviers de serrage (11, 12) composés chacun d'un levier de serrage (17), fixé sur l'arbre moteur, et d'une barre articulée (18), assemblée en articulation d'un côté avec le levier de serrage (17) et d'un autre côté avec le papillon (9), un tourillon d'arbre moteur (16) étant logé dans chacune des parois latérales (3, 4) du corps (1), qu'il traverse, le levier de serrage (17) du sous-groupe de leviers de serrage (11 ; 12) étant fixé sur l'extrémité côté intérieur de chaque tourillon, et une commande de rotation (19, 21 ; 22) attaquant l'extrémité côté extérieur du tourillon d'entraînement.

2. Robinet suivant la revendication 1, **caractérisé en ce que** les commandes de rotation se composent respectivement d'un entraînement cylindre-piston (19) et d'une barre (21) fixée par une extrémité sur le tourillon d'entraînement (16) et articulée par l'autre extrémité sur l'extrémité libre de la tige de piston (20) de l'entraînement cylindre-piston (19).

3. Robinet suivant la revendication 2, **caractérisé en ce que** les entraînements cylindre-piston (19) peuvent être attaqués par une soupape de distribution (19c) commune.

4. Dispositif suivant la revendication 1, **caractérisé en ce que** les commandes de rotation présentent des unités de transmission (22), fixées sur les extrémités extérieures des tourillons d'entraînement (16) et qui peuvent être entraînées par une commande électrique (23), par l'intermédiaire d'une répartition mécanique de couple (24, 25, 26, 27).
